# EUROPEAN PATENT APPLICATION

(11) **EP 4 764 207 A1**
(43) Date of publication of application: **24.06.2026**
(21) Application number: 24222207.3
(22) Date of filing: 20.12.2024
(51) Int. Cl.: F03D 13/10, F03D 13/20, F03D 80/70, F03D 80/80

(54) **SUPPORT ASSEMBLY FOR A WIND TURBINE AND WIND TURBINE WITH A SUPPORT ASSEMBLY**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

The present disclosure relates to a support assembly (202) for a wind turbine (100), comprising:
- a first support structure (218) for supporting a main bearing housing (204) and a gearbox (206) of the wind turbine, and
- a second support structure (220) which is configured to be rotatably mounted on top (103) of a tower (102) of the wind turbine (100) with the bottom side and which is configured to be mounted with the first support structure (218),
- wherein the first support structure (218) comprises a surface (222) for the support of the gearbox and a first supporting section (224) below that surface (222),
- wherein the second support structure (220) comprises a second supporting section (226) which is arranged directly below the first supporting section (224).

The dislosure further relates to a wind turbine with a support assembly.

## Description

The present dislosure relates to a support assembly for a wind turbine and also to a wind turbine comprising such a support assembly.

Wind turbines are widely known from the prior art and are used to convert wind energy into electrical energy.

For large drive trains, which means for example drive trains for wind turbines with a rated power bigger than 10 MW, transferring the loads from the rotor to the tower is a major challenge. The support structure supporting the drive train must be able to withstand these loads coming from the rotor via the drive train. The loads include a torsional moment which is usually transferred from a gearbox of the drive train to two gearbox mounts and then from the two gearbox mounts to the support structure. The gearbox usually comprises a gearbox housing with two torque arms which respectively extend on the left side and the right side of the gearbox housing. Each torque arm is respectively mounted on a gearbox mount. In the event of a torsional moment, one gearbox mount absorbs the downward pressure and the other gearbox mount absorbs the upward pressure. Such a gearbox mount concept is, for example, known from the DE 10 2007 053 586 B4, see Figure 1. In the exemplary gearbox mount concept disclosed in this document, each gearbox mount comprises two frames with elastomeric bearing elements and an axial pin surrounded by the elastomeric bearing elements, wherein the axial pin goes through a hole of the torque arm.

It is important that the elastomeric bearing is very strong and rigid in a circumferential direction with respect to the drive train axis (in other words: in the direction of the torsional moment), so that no relative displacements in that direction are introduced into the elastomeric bearing elements. The less deformation is allowed, the longer the lifetime of the elastomeric bearing elements.

It is therefore an object of the invention to provide an improved solution.

According to a first aspect of the disclosure, the object is solved by a support assembly for a wind turbine comprising a first support structure for supporting a main bearing housing and a gearbox of the wind turbine and a second support structure which is configured to be rotatably mounted on top of a tower of the wind turbine with a bottom side. The second support structure is configured to be mounted with the first support structure. The first support structure comprises a surface for the support of the gearbox and a first supporting section below said surface. The second support structure comprises a second supporting section which is arranged directly below the first supporting section.

To make the support assembly as stable as possible for the support of the gearbox, the support assembly comprises a first and a second support structure comprising first and second supporting sections, wherein the second supporting section is arranged directly below the first supporting section. With this structure, a high structural stability is achieved.

The arrangement with the first supporting section below the surface for supporting the gearbox and the second supporting section directly below the first supporting section enables an efficient flow of loads from the gearbox to the yaw bearing and the tower. In particular, the first supporting section and the second supporting section have a high stiffness. This high stiffness enables the displacement of the surface for the support of the gearbox (and thus the displacement of a gearbox mount comprising the elastomeric bearing elements) to be limited with respect to the gearbox torque arms. This enables the lifetime of the elastomeric bearing elements to be increased.

According to a preferred embodiment, the first supporting section and the second supporting section are fixed together, in particular by a screw connection or a bolted connection. Other types of connection are also thinkable, for example a welded connection. This means that the first supporting section comprising the surface for the support of the gearbox does not act alone, as it is coupled together with the second supporting section of the second support structure. This coupling increases the effective height of the whole supporting section, thus increasing the vertical rigidity of said whole supporting section. This enhances the stability of the support assembly and further reduces the displacement of the surface for the support of the gearbox (and thus the displacement of a gearbox mount comprising the elastomeric bearing elements) relative to the torque arms.

According to a preferred embodiment, in a top view of the wind turbine, the surface for support of the gearbox is comprised in the first supporting section and in the second supporting section. This means that the projection of the first supporting section and the second supporting section onto a plane including the surface for the support of the gearbox matches or fully encompasses that surface. This enables an efficient flow of forces from the torque arms via the support assembly into the yaw bearing and the tower.

According to a further preferred embodiment, the first supporting section and/or the second supporting section comprise a component carrier mounting interface for mounting one or more component carriers. A component carrier can, for example, be a frame carrying components such as the generator and/or other electrical components of the nacelle.

Furthermore, the high stiffness of the first supporting section and/or the second supporting section enables the deflection of the component carrier connected to the first and/or second support structure to be limited, such that the components arranged on the component carrier can remain at the intended position in the nacelle.

According to a preferred embodiment, the first supporting section extends over the full height of the first support structure on the side where the first support section is arranged and/or the second supporting section extends over the full height of the second support structure.

By this construction, the support structure is as stable as possible as the first supporting section and/or the second supporting section is arranged below the support surface for the gearbox over the full height of the first support structure and/or the second support structure.

According to a preferred embodiment, the first support structure comprises a first main section for supporting the main bearing housing of the wind turbine. The first main section is connected to the first supporting section. The first main section is preferably produced in one piece with the first supporting section and therefore integrally formed in the first supporting section. Alternatively, the first main section may be a separate piece connected to the first supporting section, e.g. via a screw connection.

Preferably, the second support structure comprises a second main section, wherein the second main section is connected to the second supporting section and is also preferably produced in one piece. Alternatively, the second main section may be a separate piece connected to the second supporting section, e.g. via a screw connection.

Preferably, the first main section and the second main section are fixed together. More preferably, the first main section and the second main section are fixed together via a main sections fixation interface, and the first supporting section and the second support section are fixed together via a supporting sections fixation interface, wherein the main sections fixation interface differs from the supporting sections fixation interface. For example, the main sections fixation interface and the supporting sections fixation interface respectively comprise one or more fixation elements (e.g. screw or bolts). The main sections fixation interface and the supporting sections fixation interface are arranged in different regions of the support assembly and/or comprise fixation elements forming different patterns. For example, the main sections interface comprises fixation elements forming a circular or arcuate pattern, and the supporting sections interface comprises fixation elements forming a linear pattern.

According to a preferred embodiment, the first supporting section protrudes from the first main section and the second supporting section protrudes from the second main section. By this feature it is guaranteed that the first supporting section and/or the second supporting section are directly connected to the main section and can provide a maximum of stability for the gearbox support.

According to a further preferred embodiment, the first main section comprises a first side wall ending in a first support surface for the main bearing housing. Preferably, the side wall comprises a circumferential shape, in particular a cylindrical shape or a conical shape, and extends around most of the circumference.

According to another preferred embodiment, the second main section comprises a second side wall ending in a second support surface for the first main section. Also, the second side wall comprises a circumferential shape, in particular a cylindrical shape or a conical shape.

Preferably, the first side wall and/or the second side wall comprises a passage opening, in other words a manhole opening, which allows an improvement of an access route for a human between the tower and the nacelle.

According to another preferred embodiment, the second support structure comprises a yaw drive mounting interface on the bottom side for supporting at least one yaw drive. The yaw drive mounting interface is usually realized as a flange protruding from the bottom end of the second side wall.

According to a second aspect of the disclosure, the disclosure relates to a wind turbine comprising a support assembly as described above. The wind turbine further comprises a gearbox having a gearbox housing with two torque arms, wherein the torque arms are arranged on opposite sides of the gearbox housing and extend in a direction away from the gearbox housing. The torque arms can either be integral parts of the gearbox housing or they can be connected to the gearbox housing e.g. via a screw connection. The torque arms are connected to the surface for supporting the gearbox. The connection between each of the torque arms and the surface for supporting the gearbox could be realized via a frame surrounding said each torque arm and fixed to the first supporting section, in particular to the surface for supporting the gearbox. This frame would then act as a gearbox mount.

According to a further embodiment, one or more elastomeric bearing elements are arranged between each of the torque arms and the corresponding frame. For example, a single elastomeric bearing element is arranged between the torque arm and the frame and partially or completely surrounds the torque arm. In another example, a plurality of elastomeric bearing elements are arranged between the torque arm and the frame. The elastomeric bearing element(s) and the corresponding frame form together a gearbox mount.

Further advantages, features and further developments are set out by the following exemplary embodiments, which are explained in conjunction with the attached figures. The same or similar elements or elements acting in the same way are provided with the same reference numerals in the following figures, even if they belong to different embodiments.
Figure 1 shows the main components of a wind turbine;
Figure 2 shows a perspective view of the drive train with the support assembly;
Figure 3 shows a perspective view of the support assembly;
Figure 4 shows a perspective view of the first support structure;
Figure 5 shows a top view of the first support structure;
Figures 6 and 7 show a perspective view of the second support structure.

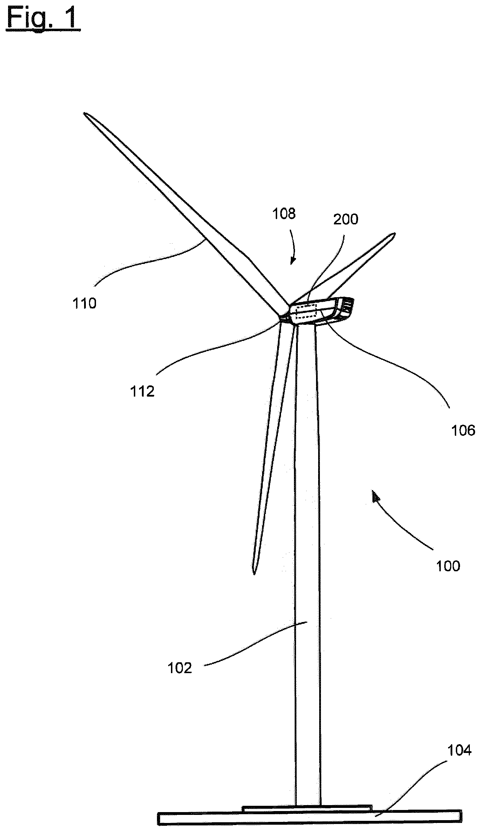

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft and a gearbox (not shown). The rotor 108 comprises one or more (wind turbine) rotor blades 110, which are movably arranged on a rotor hub 112.

During operation, the rotor 108 is set in rotation by an air flow, for example wind. This rotational movement is transmitted to the generator via the rotor shaft, with a gearbox. The generator converts the mechanical energy of the rotor 108 into electrical energy.

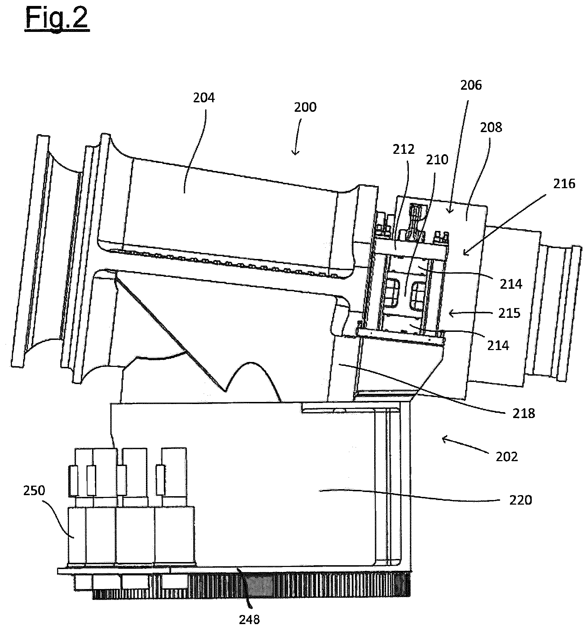

Figure 2 shows, in a side view, a drive train assembly 200 which is mounted on a support assembly 202. The drive train assembly 200 comprises a main bearing housing 204 and a gearbox 206 which comprises a gearbox housing 208. The gearbox housing 208 comprises, on opposite sides, two torque arms 210 extending in a direction away from the rest of the gearbox housing 208 (only one torque arm is shown). Each of the torque arms 210 is surrounded by a frame 212 and elastomeric bearing elements 214 within the frame 212. Each of frame 212 and the elastomeric bearing elements 214 within said frame 212 form a gearbox mount 215.

The torsional moment from the gearbox 206 is usually transferred to each of the gearbox mounts 215 via the torque support 216. In this embodiment the torque support 216 is realized by the gearbox housing 208 with the two torque arms 210 which are held in the gearbox mounts 215. More specifically, each of the torque arms 210 is held by the elastomeric bearing elements 214 surrounded by the frame 212. Other solutions for the torque support are also possible. In the event that a torsional moment is transmitted, one gearbox mount 215 absorbs the downward pressure and the other gearbox mount absorbs the upwards pressure. It is important that the elastomeric bearing is very strong and rigid in a circumferential direction with respect to the drive train axis (in other words: in the direction of the torsional moment), so that relative displacements in that direction are introduced into the elastomeric bearing elements 214. The less deformation is allowed, the longer the lifetime of the elastomeric bearing elements 214.

Therefore, the support assembly 202 comprises a first support structure 218 for supporting the main bearing housing 204 and the gearbox 206 of the wind turbine and a second support structure 220 which is configured to be rotatably mounted on top of a tower 102 of the wind turbine 100 with the bottom side and which is configured to be mounted with the first support structure 218. The first support structure 218 supports the gearbox 206 via the gearbox mounts 215. The gearbox mounts 215 are connected to the first support structure 218 via several screws.

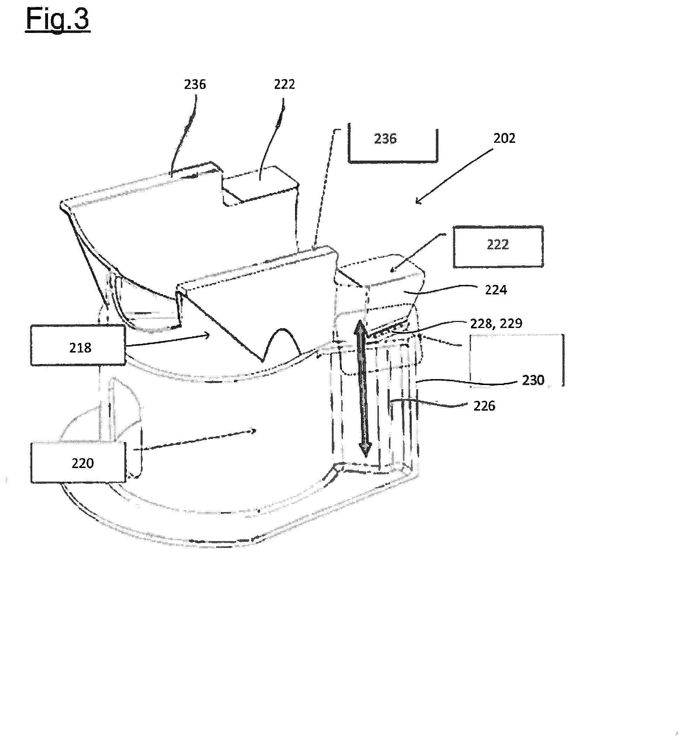

Figure 3 shows the support assembly 202 in a perspective view. The first support structure 218 comprises a surface 222 for supporting the gearbox 206 and a first supporting section 224 below said surface 222. The second support structure 220 comprises a second supporting section 226 which is arranged directly below the first supporting section 224. The first supporting section 224 and the second supporting section 226 are fixed together by a screw connection 228. Several screws are used to fix the first supporting section 224 and the second supporting section 226 together. These screws are comprised in a fixation interface 229 between the first supporting section 224 and the second supporting section 226 and form a linear pattern. The surface 222 for the support of the gearbox 226 is, in a top view of the wind turbine, comprised in the first supporting section 224 and in the second supporting section 226. The first supporting section 224 and/or the second supporting section 226 are very stiff parts of the support assembly 202 and comprise a component carrier mounting interface 230 for mounting one or more component carriers. A component carrier can, for example, be a frame carrying components such as a generator and other electrical components of the nacelle. In particular it can be the supporting frame of the nacelle. As can be seen in Figure 3, the first supporting section 224 extends over the full height of the first support structure 218 as far as the surface 222 for the gearbox support. The second supporting section 226 also extends over the full height of the second support structure 220, which means that it extends from the bottom surface of the second support structure 220 as far as the top surface of the second support structure 220 on which the first supporting section 224 is fixed by the screw connection 228.

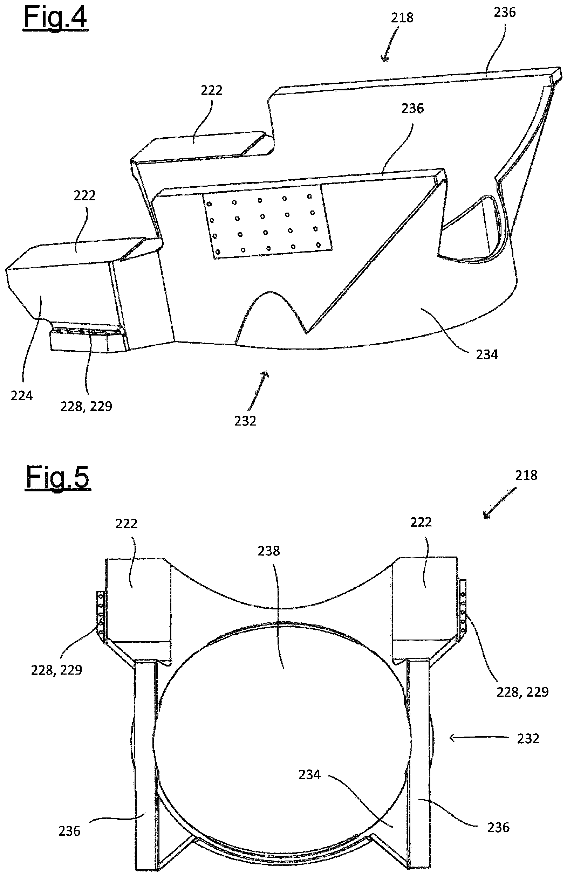

Figure 4 shows a perspective view of the first support structure 218 and Figure 5 shows a top view of the first support structure 218.

The first support structure 218 comprises a first main section 232 for supporting the main bearing housing 204. The first main section 232 is connected with the first supporting section 224 and usually produced out of cast material in one piece. Two first supporting sections 224 protrude from the first main section 232. The first main section 232 comprises a first side wall 234 ending in a first support surface 236 for the main bearing housing 204. The first support surface 236 is inclined to the horizontal direction to support the drive drain assembly 200 in a tilted angle. The first side wall 234 comprises a circumferential shape, in particular a cylindrical shape or conical shape. The first support structure 218 comprises a first passage opening 238 which enables material savings and allows service personnel to access the main bearing housing 204.

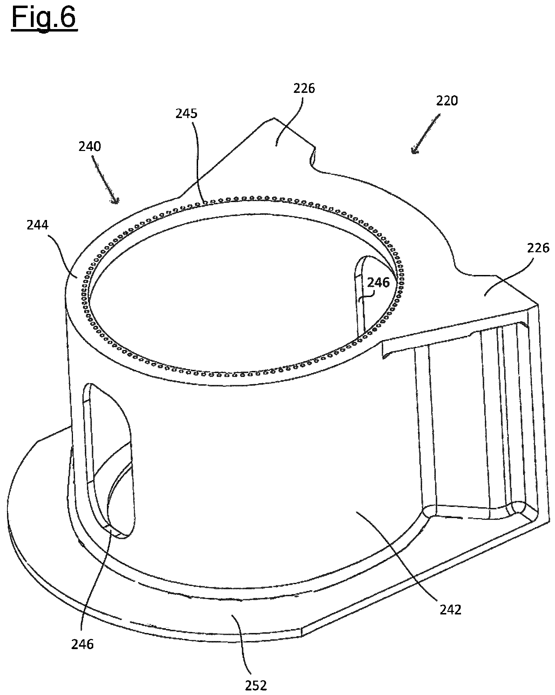

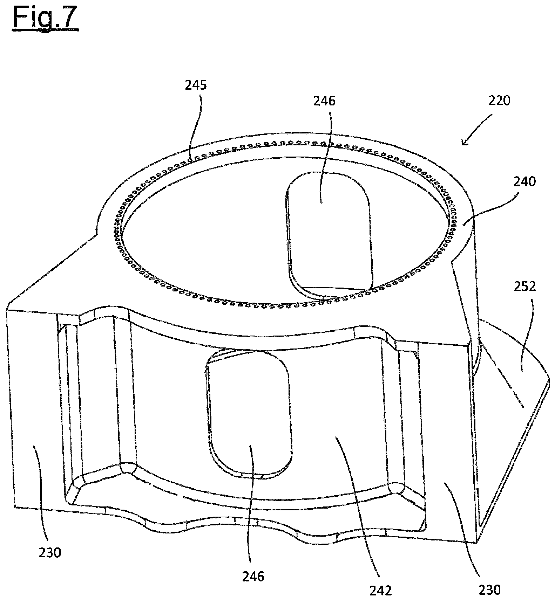

Figures 6 and 7 show a perspective view of the second support structure 220.

The second support structure 220 comprises a second main section 240 wherein the second main section 240 is connected to the second supporting section 226. The second main section 240 and the second supporting section 226 are connected to each other and usually produced in one piece, preferably of cast material. The second main section 240 comprises a second side wall 242 ending in a second support surface 244 on which the first main section 232 is mounted with its bottom surface. The second support surface 244 comprises screw holes forming a circular pattern. These screws holes are part of a fixation interface 245 for fixing the first main section 232 and the second main section 240 together. The second side wall 242 comprises a circumferential shape, in the shown embodiment a cylindrical shape, and two second supporting sections 226 are extending or protruding from this cylindrical side wall 242. In the second side wall 242, two second passage openings 246 are integrated which allow easy access for service personnel from the tower to the nacelle using a passageway through the second support structure 220. The second support structure 220 comprises a yaw drive mounting interface 248 for supporting at least one yaw drive 250 (see Figure 2). The yaw drive mounting interface is realized with the flange 252 extending from the second side wall 242 of the second support structure 220.

By separating the support structure into a first support structure 218 and a second support structure 220, it is possible to build each of the first and second support structure 218, 220 so that they can be transported separately, thus rendering the logistics easier. By the feature that the first supporting section 224 is protruding from the first side wall 234 of the first support structure 218 and also by the feature that the second supporting section 226 is protruding from the second main section 224 and arranged directly below the first supporting section 224, an extremely stiff support structure is achieved. The gearbox mounts 215 are connected to the first supporting section 224 and absorb the torsional moment from the gearbox housing 208, especially from the torque arms 210.

This construction enables the displacement of the surface 222 for the support of the gearbox 206 (and thus the displacement of the gearbox mounts 215 comprising the elastomeric bearing elements 214) to be limited with respect to the torque arms 210. This drastically expands the lifetime of the elastomeric bearing elements 214.

### List of reference signs

- 100: wind turbine
- 102: tower
- 104: foundation
- 106: nacelle
- 108: rotor
- 110: rotor blade
- 112: rotor hub
- 200: drive train assembly
- 202: support assembly
- 204: main bearing housing
- 206: gearbox
- 208: gearbox housing
- 210: torque arms
- 212: frame
- 214: elastomeric bearing elements
- 215: gearbox mount
- 216: torque support
- 218: first support structure
- 220: second support structure
- 222: surface for supporting a gearbox
- 224: first supporting section
- 226: second supporting section
- 228: screw connection
- 229: supporting sections fixation interface
- 230: component carrier mounting interface
- 232: first main section
- 234: first side wall
- 236: first support surface
- 238: first passage opening
- 240: second main section
- 242: second side wall
- 244: second support surface
- 245: main sections fixation interface
- 246: second passage opening
- 248: yaw drive mounting interface
- 250: yaw drive
- 252: flange

## Claims

1. Support assembly (202) for a wind turbine (100), comprising:
- a first support structure (218) for supporting a main bearing housing (204) and a gearbox (206) of the wind turbine, and
- a second support structure (220) which is configured to be rotatably mounted on top (103) of a tower (102) of the wind turbine (100) with the bottom side and which is configured to be mounted with the first support structure (218),
- wherein the first support structure (218) comprises a surface (222) for the support of the gearbox and a first supporting section (224) below that surface (222),
- wherein the second support structure (220) comprises a second supporting section (226) which is arranged directly below the first supporting section (224).

2. Support assembly according to claim 1, wherein the first supporting section (224) and the second supporting section (226) are fixed together, in particular by a screw connection (228) or a bolted connection.

3. Support assembly according to claim 1 or 2, wherein the surface (222) for the support of the gearbox is, in a top view of the wind turbine, comprised in the first supporting section (224) and in the second supporting section (226).

4. Support assembly according to one of the claims 1 to 3, wherein the first supporting section (224) and/or the second supporting section (226) comprise a component carrier mounting interface (230) for mounting one or more component carriers.

5. Support assembly according to one of claims 1 to 4, wherein the first supporting section (224) extends over the full height of the first support structure (218) and/or the second supporting section (226) extends over the full height of the second support structure (220).

6. Support assembly according to one of the claims 1 to 5, wherein the first support structure (218) comprises a first main section (232) for supporting the main bearing housing (204) of the wind turbine, wherein the first main section (232) is connected to the first supporting section (224).

7. Support assembly according to one of the claims 1 to 6, wherein the second support structure (220) comprises a second main section (240), wherein the second main section (240) is connected to the second supporting section (226).

8. Support assembly according to claim 6 or 7, wherein the first supporting section (224) protrudes from the first main section (232) and/or wherein the second supporting section (226) protrudes from the second main section (240) .

9. Support assembly according to one of the claims 6 to 8, wherein the first main section (232) comprises a first side wall (234) ending in a first support surface (236) for the main bearing housing (204) and/or wherein the second main section (240) comprises a second side wall (242) ending in a second support surface (244) for the first main section (232).

10. Support assembly according to claim 9, wherein the first side wall (234) comprises a circumferential shape and/or wherein the second side wall (242) comprises a circumferential shape, in particular a cylindrical shape or a conical shape.

11. Support assembly according to claim 9 or 10, wherein the first side wall (234) and/or the second side wall (242) comprise a passage opening (238, 240).

12. Support assembly according to one of the claims 1 to 11, wherein the second supporting structure (220) comprises a yaw drive mounting interface (248) on the bottom side for supporting at least one yaw drive (250) .

13. Wind turbine comprising a support assembly according to one of the claims 1 to 12, further comprising a gearbox (206) having a gearbox housing (208) with two torque arms (210), wherein the torques arms (210) are arranged on opposite sides of the gearbox housing (208) and extend in a direction away from the gearbox housing (208), wherein the torque arms (210) are connected to the surface (222) for supporting the gearbox.

14. Wind turbine according to claim 13, wherein each of the torque arms (210) is connected to the surface (222) for supporting the gearbox by a frame (212) which surrounds the torque arm (210) and which is fixed to the first supporting section (224).

15. Wind turbine according to claim 14, wherein one or more elastomeric bearing elements (214) arranged between each of the torque arms (210) and the corresponding frame (212).
